# EUROPEAN PATENT APPLICATION

(11) **EP 4 635 672 A1**
(43) Date of publication of application: **22.10.2025**
(21) Application number: 25153811.2
(22) Date of filing: 24.01.2025
(51) Int. Cl.: B23K 26/352, B23K 103/12

(54) **LASER SURFACE MODIFICATION METHOD AND SYSTEM FOR IMPROVED PLATE SURFACE**

(30) Priority: 25.03.2024 US 202418615395
(71) Applicant: Rockwell Collins, Inc., Cedar Rapids, IA 52498 (US)
(72) Inventor: WESTERGREN, David L., Cedar Rapids, IA (US); NANCE, Timothy J., Cedar Rapids, IA (US); STUMME, Nathan, Iowa City, IA (US)
(74) Representative: Dehns

(57) **Abstract**

A laser system (102) emits a laser beam (148) at a surface (202) of a substrate (111) to modify the surface. The substrate is cleaned to increase reflectivity of the surface. The laser beam is applied to the surface. The laser beam moves across the surface of the substrate. The surface is modified by the laser beam to vary the surface up to one micron, or 1 µm. A surface area of the surface is increased by the variations. The laser beam is stopped after modification of the surface of the substrate is complete.

## Description

### Field of the Invention

The present invention relates methods and a system for laser surface modification for plating optimization to improve adhesive properties.

### Description of the Related Art

Operations for plating on highly polished copper surfaces can lead to poor adhesion properties. As a result, mechanical roughening of the copper surface of a plate is performed to increase adhesion and the uniformity of the plating process. These modifications to the plate may improve the properties for surfaces used in soldering applications. The mechanical roughening, however, takes time to perform.

An improved process is desired to achieve the properties for the surface without the need for mechanical roughening or time-consuming tasks to modify the plate surface.

### Summary of the Invention

In some embodiments, a method is disclosed. The method includes cleaning a copper substrate having a surface to increase reflectivity of the surface. The method also includes applying a laser beam to the surface of the copper substrate. The method also includes moving the laser beam across the surface of the copper substrate. The method also includes modifying the surface of the copper substrate to vary the surface up to one micron. A surface area of the surface is increased by variations. The method also includes stopping the laser beam after modification of the surface is complete.

In some embodiments, a method is disclosed. The method includes cleaning a copper substrate having a surface using a chemical solution to increase reflectivity of the surface. The method also includes wet-etching the surface of the copper substrate. The method also includes activating a laser system to emit a laser beam. The method also includes applying the laser beam to the surface of the copper substrate. The method also includes moving the laser beam across the surface of the copper substrate. The method also includes modifying the surface of the copper substrate with the laser beam to vary the surface up to one micron. A surface area of the surface is increased by variations. The method also includes stopping the laser beam once modification of the surface is complete. The method also includes placing the copper substrate having the modified surface into an immersion plating solution.

In some embodiments, a laser system is disclosed. The laser system includes a laser to emit a laser beam. The laser system also includes a processor to receive instructions stored in a memory. The instruction configure the laser system to position a copper substrate having a surface. The instructions also configure the laser system to apply the laser beam to the surface of the copper substrate. The instructions also configure the laser system to move the laser beam across the surface of the copper substrate. The instructions also configure the laser system to modify the surface of the copper substrate to vary the surface up to one micron. A surface area of the surface is increased by variations. The instructions also configure the laser system to stop the laser beam once modification of the surface is complete.

These, as well as other embodiments, aspects, advantages, and alternatives, will become apparent to those of ordinary skill in the art by reading the following detailed description, with reference where appropriate to the accompanying drawings. Further, this summary and other descriptions and figures provided herein are intended to illustrate embodiments by way of example only and, as such, numerous variations are possible. For instance, structural elements and process steps may be rearranged, combined, distributed, eliminated, or otherwise changed, while remaining with the scope of the disclosed embodiments.

### Brief Description of the Drawings

Implementations of the inventive concepts disclosed herein may be better understood when consideration is given to the following detailed description thereof. Such description makes reference to the included drawings, which are not necessarily to scale, and which some features may be exaggerated and some features may be omitted or may be represented schematically in the interest of clarity. Like reference numerals in the drawings may represent and refer to the same or similar element, feature, or function. In the drawings:
Figure 1 illustrates a cross-sectional side view of a laser system according to the disclosed embodiments.
Figure 2 illustrates a diagram of processing a substrate prior to and after modification by the laser system according to the disclosed embodiments.
Figure 3 illustrates an example of a surface of the substrate after being subjected to the laser system in the laser application process according to the disclosed embodiments.
Figure 4 illustrates an example cross-section of the topography of substrate after application of the laser beam, taken along line A-A of Figure 3 according to the disclosed embodiments.
Figure 5 illustrates a flowchart for modifying a substrate using the laser system according to the disclosed embodiments.

### Detailed Description of the Preferred Embodiments

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of the embodiments of the inventive concepts, numerous specific details are set forth in order to provide a more thorough understanding of the inventive concepts. It will be apparent to one skilled in the art, however, having the benefit of the instant disclosure that the inventive concepts disclosed herein may be practiced without these specific details.

In other instances, well-known features may not be described in detail to avoid unnecessarily complicating the instant disclosure. The inventive concepts disclosed herein are capable of other embodiments or of being practiced or performed in various ways. Further, it is to be understood that the phraseology and terminology employed herein is for the purpose of description and should not be regarded as limiting.

As used herein, a letter following a reference numeral is intended to reference an embodiment of the feature or element that may be similar, but not necessarily identical, to a previously described element or feature bearing the same reference numeral, such as 1, 1a, or 1b. Such shorthand notations are used for purposes of convenience only, and should not be construed to limit the inventive concepts disclosed herein in any way unless expressly stated to the contrary.

Moreover, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes plural unless it is obvious that it is meant otherwise. It will be further understood that the terms "comprises" or "comprising," when used in this specification, specify the presence of stated features, integers, steps, operations, elements, or components, but do not preclude the presence or addition of one or more other features, integers, steps, operations, elements, components, and/or groups thereof.

As used herein, any reference to "one embodiment," or "some embodiments" means that particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination or sub-combination of two or more such features, along with any other features that may not necessarily be expressly described or inherently present in the instant disclosure.

The inventive concepts may be described with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams or flowchart illustration, and combinations of blocks in the block diagrams or flowchart illustration, can be implemented by special purpose hardware-based systems that perform the specified functions or acts, or combinations of special purpose hardware and computer instructions.

Inventive concepts may be implemented as a computer process, a computing system or as an article of manufacture such as a computer program product of computer readable media. The computer program product may be a computer storage medium readable by a computer system and encoding computer program instructions for executing a computer process. When accessed, the instructions cause a processor to enable other components to perform the functions disclosed below.

Broadly, embodiments of the inventive concepts disclosed herein are directed to the use of a laser to create a uniform surface with variation of up to one micron. This process increases the surface area of the copper substrate. A laser system capable of modifying the surface of the copper can be used. The laser system controls the heating and surface roughness created using the disclosed processes. Previous surface modification methods involve mechanical roughening that removes material prior to the plating process. These methods take time and may require operator intervention.

Because the power of the laser system is kept low, the surface is only modified as the laser moves across the surface of the copper substrate. This process melts the surface slightly to create uniform surface topography that promotes better plating adhesion. The indication of a properly prepared surface may include a shiny surface prior to laser processing and a uniform matte finish after laser processing. The inventive concepts may be used with immersion plating solutions like silver or tin, but other chemistries may be used with similar results.

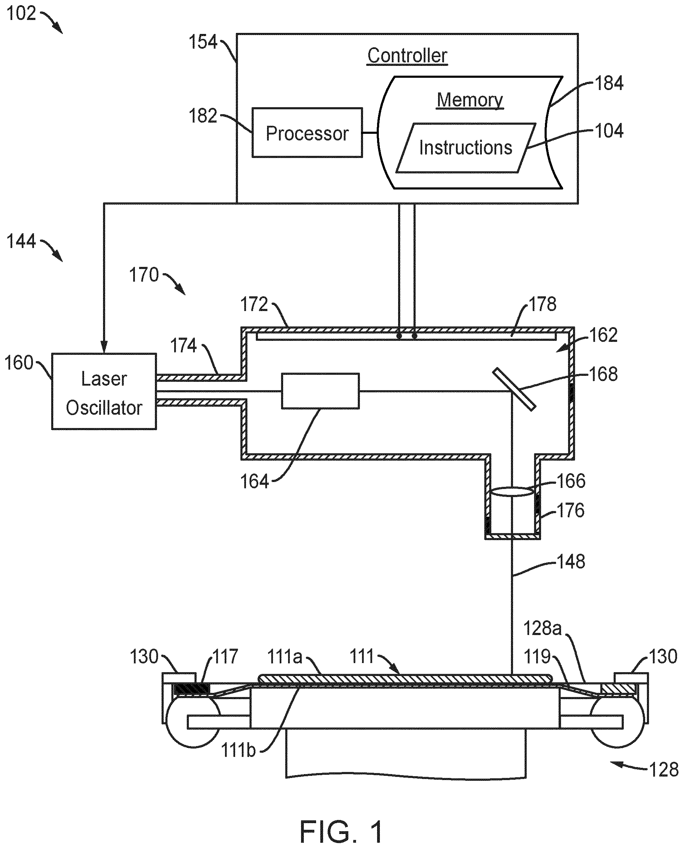

Figure 1 depicts a cross-sectional side view of a laser system 102 according to the disclosed embodiments. Laser beam irradiation unit 144 includes a laser oscillator 160. An optical system 162 guides a laser beam 148, which is output from laser oscillator 160, to substrate 111 held on positioning table 128. Optical system 162 includes a plurality of optical components, and controls the traveling direction, profile, focus position, and the like of laser beam 148 to be applied to substrate 111.

In some embodiments, optical system 162 includes an output adjustment unit 164 that adjusts the output of laser beam 148 emitted from laser oscillator 160 and a condenser (optical component) 166 that focuses laser beam 148 emitted from laser oscillator 160. For example, an attenuator may be used as output adjustment unit 164, and a focusing lens such as a convex lens may be used as condenser 166.

Optical system 162 also may include one or more optical components 168 to guide laser beam 148 from laser oscillator 160 to condenser 166. One or more optical components 168 may correspond to a lens that shapes or focuses laser beam 148, a mirror that reflects laser beam 148, or the like. Laser beam 148 emitted from laser oscillator 160 enters condenser 166 by way of output adjustment unit 164 and one or more optical components 168. Further examples of one or more optical components 168 include a polarizing beam splitter (PBS), a diffractive optical element (DOE), a liquid crystal on silicon-spatial light modulator (LCOS-SLM), and so on. Further, optical system 162 may include different kinds of optical components.

Laser beam irradiation unit 144 also include a casing 170 that accommodates the components disclosed above, such as output adjustment 164, condenser 166, one or more optical components 168, and the like, of optical system 162. Casing 170 includes, for example, a cuboidal case (box) 172 and cylindrical shield tubes 174 and 176. Shield tube 174 is connected on a side of one end thereof to laser oscillator 160 and on a side of the other end thereof to a side wall of case 172. Shield tube 176 is connected on a side of one end thereof to a bottom wall of case 172, and is covered on a side of the other end thereof by a transparent protective cover through which laser beam 148 transmits. Shield tube 176 may, however, be covered on the side of the other end thereof by condenser 166 instead of the arrangement of the protective cover.

Case 172 and shield tubes 174 and 176 may be made from a material that shields laser beam 148, so that laser beam 148 is prevented from leaking to an outside of casing 170. Output adjustment unit 164 and one or more optical components 168 may be accommodated in case 172. Condenser 166 may be accommodated in shield tube 176. Alternatively, condenser 166 may be accommodated in case 172.

Laser beam 48 emitted from laser oscillator 160 travels into case 172 via shield tube 174, and enters output adjustment unit 164. The output of laser beam 148 may be adjusted by output adjustment unit 164. Laser beam 148 emerging from output adjustment unit 164 is then guided to shield tube 176 by one or more optical components 168. After that, laser beam 148 enters condenser 166, is focused at a predetermined position, and is applied to substrate 111 held on positioning table 128.

When substrate 111 is processed by laser system 102, substrate 111 is first positioned on positioning table 128. For example, substrate 111 is placed on positioning table 128 such that substrate 111 is exposed upwards on the side of front surface 111a and faces holding surface 128a on the side of back surface 111b on the side of sheet 119. A frame 117 may be fixed by clamps 130. When a negative pressure, such as a suction force, is allowed to act on holding surface 128a, substrate 111 may be held on positioning table 128 via sheet 119.

Laser beam 148 is applied from laser beam irradiation unit 144 toward substrate 111, so that laser processing is applied to substrate 111. Irradiation conditions for laser beam 148 are set according to details of the laser processing to be applied to substrate 111. If ablation processing is applied to substrate 111, for example, the wavelength of laser beam 148 is absorbed in substrate 111. In other words, laser beam 148 emitted from laser oscillator 160 has absorptivity for substrate 111. Other conditions (average output, repetition frequency, processing feed rate, and the like) for laser beam 148 are appropriately set such that appropriate ablation processing is applied to substrate 111. In some embodiments, laser oscillator 160 may be an infrared diode laser emitter. Alternatively, laser oscillator 160 may a CO₂ unit.

When positioning table 128 is moved along the processing feed direction with laser beam 148 being focused on front surface 111a of substrate 111 or inside substrate 111, positioning table 128 and laser beam 148 are moved relative to each other, whereby laser beam 148 is scanned along the processing feed direction. As a result, ablation processing is applied to substrate 111, whereby laser processing is done on front surface 111a of substrate 111. The laser processing increases the surface area of substrate 111, as disclosed below.

If contaminants such as particles (dirt, dust, and the like) deposit on output adjustment unit 164, condenser 166, one or more optical components 168, and the like of optical system 162, a variety of inconveniences may arise such as distortion in the profile a deviation in the focus position, or a decrease in the output of laser beam 148. Thus, components of optical system 162 are accommodated in casing 170 in such a manner as to isolate them from the outside. This feature may prevent particles and the like from depositing on the components of optical system 162. Components, however, other than the components of optical system 162 may be arranged inside casing 170.

For example, a holder that holds one or more optical components 168 and an actuator, such as a motor, that controls the position or angle of one or more optical components 168 in casing 170. Outgas released from the holder and the actuator may deposit on optical component 168 despite the isolation and sealing of the interior of casing 170. Further, at the time of maintenance of laser system 102, case 172 may be opened to conduct adjustments, replacements, cleaning, or the like of the components of optical system 162. Particles may penetrate into casing 170 and may stay there, and may deposit on the components of optical system 162 that has been subjected to the maintenance.

In laser beam irradiation unit 144, an ionizer 178 may be disposed inside casing 170 to capture contaminants such as particles therein. This feature may suppress the contaminants that are present inside casing 170 from floating and depositing on the components of optical system 162, thereby making it possible to irradiate substrate 111 with laser beam 148. For example, a bar-type ionizer 178 with a positive discharge electrode and a negative discharge electrode included therein is placed on an upper wall of case 172. Positive ions and negative ions produced by ionizer 178 are dispersed inside case 172. The positive ions and negative ions produced by ionizer 178 may act on contaminants such as particles that are present inside case 172, so that the contaminants are charged positive or negative. The contaminants then charged positive or negative then deposit on the negative discharge electrode or the positive discharge electrode of ionizer 178 to which a negative or positive high voltage is applied. As a result, the contaminants inside case 172 are captured and collected by ionizer 178, thereby preventing the contaminants from depositing on output adjustment unit 164, condenser 166, one or more optical components 168, and the like.

Controller 154 may provide commands to laser oscillator 160 as well as other components within laser system 102. Controller 154 may instruct laser oscillator to activate and stop depending on feedback received from positioning table 128 and the position of substrate 111. Controller 154 may instruct laser oscillator 160 to operate at a low power setting in order to apply laser beam 148 to substrate 111. Controller 154 also may instruct components of optical system 162 to perform actions to perform ablation on substrate 111.

For example, depending on laser system 102, power may be varied by a percentage of output. Laser system 102 may include a 2 watt (W) infrared laser to perform the disclosed operations, which uses 100% of the possible power. In another example, laser system 102 may use a 20W laser that would use 10% of the output. A CO₂ laser may use 1% or less to achieve the same results. Variation of the speed that laser system 102 moves also may change the power applied during the operations. The faster it moves, then the higher power may be used. For example, laser system 102 may move at 125mm/second. This speed may be increased with a higher power laser.

Controller 154 may include one or more processors 182 that execute instructions 104 stored in memory 184. One or more processors 182 may configure laser system 102 to perform various functions, as disclosed below. Further, controller 154 may operate ionizer 178 to turn on and off when needed. Instructions 104 may be updated as needed to reconfigure laser system 102. For example, settings may need to be changed for different types of laser oscillators 160.

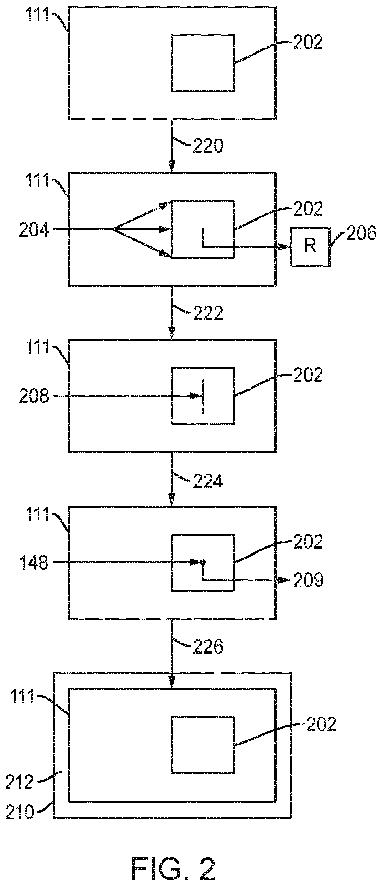

Figure 2 depicts a diagram of processing substrate prior to 111 and after modification by laser system 102 according to the disclosed embodiments. Substrate 111 is provided. Substrate 111 may be a copper substrate that it to be used for the interconnection of electronic devices or as conductor in microelectronics. Substrate 111 may used as a surface for such connections. Substrate 111 includes surface 202. Surface 202 may include the entirety of substrate 111 but is shown as a portion of substrate 111 in Figure 2 for illustrative purposes only. Surface 202 may be prepared prior to the application of laser beam 148 by laser system 102.

In some embodiments, substrate 111 is moved to process 220 where surface 202 is cleaned. Cleaning solution 204 is applied to surface 202 to create a texture having an increased reflectivity. Cleaning solution 204 may be a chemical solution used to remove native oxide from substrate 111. For example, an acid-based cleaner may be used. Methanesulfonic acid (MSA) at 1-10% dilution, sulfuric acid (H₂SO₄) diluted to 1-10%, and the like may be used. A surfactant in the cleaning solution may remove finger oils or other contaminates present on the surface for a better clean.

In some embodiments, surface 202 has a reflective finish 206. Its reflectivity value R is increased for surface 202 over surfaces of substrate 111 not subject to process 220. Surface 202 should be shiny, or have a reflectivity value R higher than a specified threshold. Preferably, reflectivity value R may provide a mirror-like finish. Reflections may have sharp edges when viewed on the surface that is cleaned.

In some embodiments, substrate 111 is moved to process 222 where surface 202 is subjected to a wet-etching solution 208. Wet-etching may be a material removal process that uses liquid chemicals or etchants to remove materials from surface 202. Wet-etching solution 208 may be nitric acid or a saturated Fe(Cl) solution, or mixtures of NH₄OH or H₂O₂ as well. Surface 202 may be slightly oxidized after applying wet-etching solution 208 and also may exhibit an orange color.

Substrate 111, in process 224, is subjected to laser beam 148 at surface 202. Laser beam 148 melts surface 202 slightly to create a surface topography that promotes better plating adhesion. The surface topography may be relatively uniform in that the top of surface 202 is varied up to one micron, or µm. Laser system 102 moves laser beam 148 across surface 202. In some embodiments, process 224 melts the copper of substrate 111 so that copper particles are not released into the air during the laser processing. The melting process may be one factor in cleaning and wet-etching surface 202. Surface 202 may have a uniform matte finish 209 after laser beam 148 is applied. Thus, surface 202 changes from a reflective finish 206 to a matte finish 209 after the application of laser beam 148.

In some embodiments, substrate 111 is moved to process 226 where substrate 11 is placed in an immersion plating solution 212. Immersion plating solution 212 may be provided in immersion device 210. In some embodiments, immersion plating solution 212 is silver or tin, but other chemistries may be used with similar results. Copper ions are replaced with silver ions, tin ions, or the ions in solution 212. Process 226 further enhances the connectivity and conductivity of substrate 111.

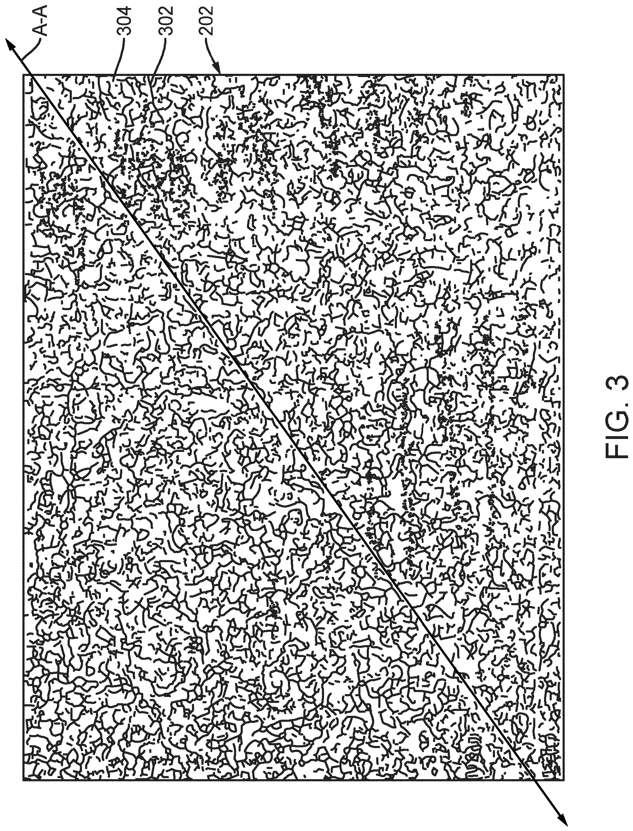

Figure 3 depicts an example of substrate 111 after being subjected to laser system 102 in process 224 according to the disclosed embodiments. As can be appreciated, topography of substrate 111 includes indentations that indicate surface 302 is not smooth. Further, the patterns of the indentations are not the same in straight lines. Instead, the amount of indentation varies along surface 202. For illustrative purposes, lower point 302 may be shown within an indentation generated by laser beam 148 melting the substrate material in that location. Upper point 304 also may be shown as a location not subject to as much melting by laser beam. The distance between a lower point and an upper point for a portion of surface 202 may be controlled to not exceed 1 micron, or 1 µm. It also can be appreciate that laser system 102 moves laser beam 148 across surface 202 of substrate 111 due to the topography shown in Figure 3.

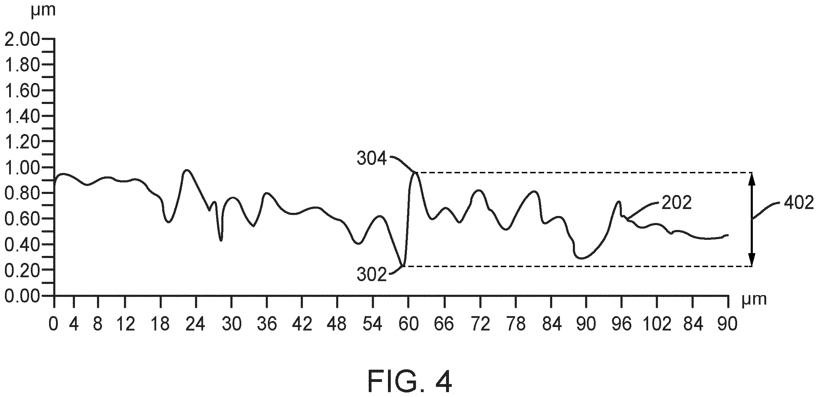

Figure 4 depicts an example cross-section of the topography of substrate 111 after application of laser beam 148, taken along a portion of line A-A of Figure 3 according to the disclosed embodiments. Surface 202 is modified so that indentations are made that result in lower point 302 and upper point 304. As can be appreciated, the amount of melted substrate varies along the distance shown in Figure 4. A difference 402 may be shown between lower point 302 and upper point 304. For example, difference 402 may be 0.76 µm, or less than 1 µm. The amount of melted substrate also varies in order to increase the surface area of the substrate available for further processing or connectivity.

In some embodiments, laser system 102 may have a spot size and rep rate. Laser beam 148 may not be on constantly. Laser system 102 may fire, usually hundreds to thousands of times per second depending on the laser system. Using these features, the surface area of the substrate may have a varied surface.

Surface 202 shown in Figure 4 has an increased surface area over a flat surface. The slopes and regions between the upper points and lower points of the indentations provide more surface of the substrate that is available for further processing or use in creating connections. In some embodiments, the copper substrate melts to allow more copper to be exposed.

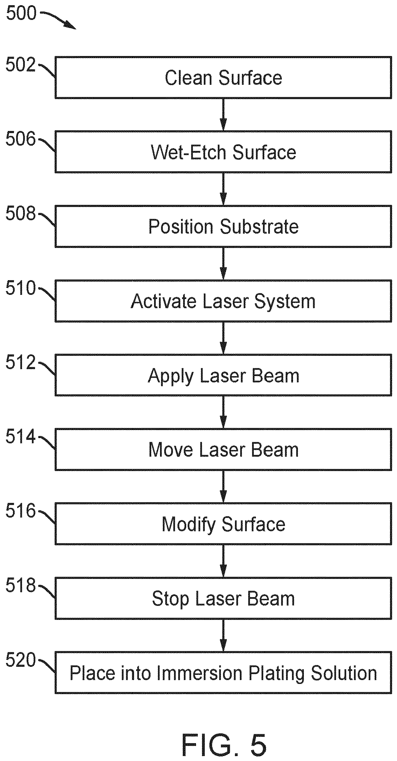

Figure 5 depicts a flowchart 500 for modifying a substrate 111 using laser system 102 according to the disclosed embodiments. Flowchart 500 may refer to Figures 1-4 for illustrative purposes. Flowchart 500, however, is limited to the inventive concepts disclosed by Figures 1-4.

Step 502 executes by cleaning substrate 111 having surface 202 using cleaning solution 204. Cleaning solution 204 may be applied to surface 202 to remove particles or other materials that may interfere with the application of laser beam 148. This step also should increase the reflectivity of surface 202 so that it is shiny. Step 504 executes by wet-etching surface 202 of substrate 111. As disclosed above, wet-etching also helps prepare surface 202 as an optional material removal process using liquid chemicals or etchants.

Step 508 executes by positioning substrate 111 on positioning table 128 of laser system 102. Substrate 111 is positioned to be inline with optical system 162 to guide laser beam 148 to surface 202. Step 510 executes by activating laser system 102 through laser oscillator 160 to emit laser beam 148. Laser beam 148 emits through optical system 162 and is directed at positioning table 128. Step 512 executes by applying laser beam 148 to surface 202 of substrate 111.

Step 514 executes by moving laser beam 148 across surface 202 of substrate 111 using optical system 162. Alternatively, positioning table 128 may move substrate 111 so that laser beam 148 crosses surface 202. Step 516 executes by modifying surface 202 of substrate 111 to vary the surface. Laser beam 148 melts substrate 111 to form indentations in surface 202. The topography of surface 202 is modified to include lower points and upper points as well as slopes between these points that increase the surface area of surface 202. Steps 514 and 516 may be executed in any order or together such that modification of surface 202 occurs as laser beam 148 is moving.

Step 518 executes by stopping laser beam 148 by shutting off laser oscillator 160 once surface 202 is modified. Controller 154 may send an instruction to laser oscillator 160 to shut off power. At this stage, surface 202 should have a matter or non-reflective finish due to modification. In some embodiments, step 520 may be executes to place substrate 111 having modified surface 202 into immersion plating solution 212. Immersion plating solution 212 may be silver or tin and interacts with substrate 111 for further finishing.

As will be appreciated by one skilled in the art, the present invention may be embodied as a system, method or computer program product. Accordingly, the present invention may take the form of an entirely hardware embodiment, an entirely software embodiment (including firmware, resident software, micro-code, etc.) or an embodiment combining software and hardware aspects that may all generally be referred to herein as a "circuit," "module," or "system." Furthermore, the present invention may take the form of a computer program product embodied in any tangible medium of expression having computer-usable program code embodied in the medium.

The corresponding structures, material, acts, and equivalents of all means or steps plus function elements in the claims below are intended to include any structure, material or act for performing the function in combination with other claimed elements are specifically claimed. The description of the present invention has been presented for purposes of illustration and description, but is not intended to be exhaustive or limited to the invention in the form disclosed. The embodiment was chosen and described in order to best explain the principles of the invention and the practical application, and to enable others of ordinary skill in the art to understand the invention for embodiments with various modifications as are suited to the particular use contemplated.

## Claims

1. A method comprising:
cleaning a copper substrate having a surface to increase reflectivity of the surface;
applying a laser beam to the surface of the copper substrate;
moving the laser beam across the surface of the copper substrate;
modifying the surface of the copper substrate to vary the surface up to one micron, wherein a surface area of the surface is increased by variations; and
stopping the laser beam after modification of the surface is complete.

2. The method of claim 1, further comprising wet-etching the surface of the copper substrate to oxidize the surface.

3. The method of claim 1 or 2, wherein modifying the surface includes melting particles of the surface of the copper substrate; and/or wherein the surface area of the surface is increased to roughen the copper substrate.

4. The method of claim 1, 2 or 3, further comprising placing the copper substrate having the modified surface in an immersion plating solution; and optionally wherein immersion plating solution includes silver or tin.

5. The method of claim 1, 2, 3 or 4, wherein the modified surface of the copper substrate includes a matte or non-reflective finish on the modified surface.

6. The method of claim 1, 2, 3, 4 or 5, further comprising activating a laser system to emit the laser beam; and optionally further comprising emitting the laser beam using an infrared laser of the laser system.

7. A method comprising:
cleaning a copper substrate having a surface using a chemical solution to increase reflectivity of the surface;
wet-etching the surface of the copper substrate;
activating a laser system to emit a laser beam;
applying the laser beam to the surface of the copper substrate;
moving the laser beam across the surface of the copper substrate;
modifying the surface of the copper substrate with the laser beam to vary the surface up to one micron, wherein a surface area of the surface is increased by variations;
stopping the laser beam once modification of the surface is complete; and
placing the copper substrate having the modified surface into an immersion plating solution.

8. The method of claim 7, wherein modifying the surface includes melting particles of the surface of the copper substrate; and optionally wherein the melted particles remain on the modified surface of the copper substrate.

9. The method of claim 7 or 8, further comprising further comprising emitting the laser beam using an infrared diode laser of the laser system.

10. The method of claim 7, 8 or 9, wherein the modified surface of the copper substrate includes a matte/non-reflective finish on the modified surface and/or wherein the immersion plating solution includes silver or tin such that a plurality of copper particles is replaced with a plurality of silver particles or a plurality of tin particles.

11. A laser system (102) comprising:
a laser (160) to emit a laser beam (148);
a processor (182) to receive instructions stored in a memory (184), wherein the instructions configure the laser system to
position a copper substrate (111) having a surface (202);
apply the laser beam to the surface of the copper substrate;
move the laser beam across the surface of the copper substrate;
modify the surface of the copper substrate to vary the surface up to one micron, wherein a surface area of the surface is increased by variations; and
stop the laser beam once modification of the surface is complete.

12. The laser system of claim 11, wherein the processor (160) is further configured to use the laser beam (148) to melt particles of the surface (202) to modify the surface.

13. The laser system of claim 11 or 12, wherein the laser (160) is an infrared diode laser.

14. The laser system of claim 11, 12 or 13, wherein the melted particles remain on the modified surface (202) of the copper substrate (111).

15. The laser system of claim 11, 12, 13 or 14, wherein the modified surface (202) of the copper substrate (111) includes a matte/non-reflective finish on the modified surface.
